# EUROPEAN PATENT SPECIFICATION

(11) **EP 2 809 997 B1**
(45) Date of publication and mention of the grant of the patent: **12.04.2017**
(21) Application number: 13742935.3
(22) Date of filing: 31.01.2013
(51) Int. Cl.: F24F 13/28, B01D 46/24, F24F 3/16, B01D 46/00

(54) **METHOD AND DEVICE FOR AIR TREATMENT INCLUDING A HOUSING HAVING A FAN, PARTICLE FILTERS AND TUBULAR CARBON FILTERS.**
VERFAHREN UND VORRICHTUNG ZUR LUFTBEHANDLUNG EINSCHLIESSLICH EINES GEHÄUSES MIT EINEM GEBLÄSE, PARTIKELFILTERN UND RÖHRENFÖRMIGEN FILTERN
PROCÉDÉ ET DISPOSITIF DE TRAITEMENT D'AIR INCLUANT UN BOÎTIER, AYANT UN VENTILATEUR, DES FILTRES À PARTICULES ET DES FILTRES À CARBONE TUBULAIRES.

(30) Priority: 31.01.2012 SE 1250067
(43) Date of publication of application: 10.12.2014
(73) Proprietor: Camfil AB, 111 34 Stockholm (SE)
(72) Inventor: HEDSTRÖM, Anders, S-111 54 Stockholm (SE)
(74) Representative: Zacco Sweden AB
(86) International application number: PCT/SE2013/050080
(87) International publication number: WO 2013/115717

(56) References cited:
- EP-A1- 2 071 248
- WO-A1-01/66258
- WO-A1-2006/046900
- DE-A1- 2 846 036
- US-A- 4 737 173
- US-B1- 6 974 197

## Description

### FIELD OF THE INVENTION

The invention concerns an air treatment device including a housing having a fan, wherein the housing is arranged for releasable receiving inlet filter means connected to a suction side of the fan and outlet filter means connected to a pressure side of the fan. The invention also concerns a system and a method for air treatment, in particular air cleaning.

### BACKGROUND OF THE INVENTION

The technology of cleaning air with the aid of carbon filters and particle filters in combination is previously known. It is also previously known to clean air with carbon filters of different specifications for different purposes and for handling specific emissions. The carbon is often impregnated with a particular substance in order to be able to filter away a specific impurity in the air, which is a difficult and expensive science.

Carbon filters are generally considered as filters that absorb but normally does not break down unwanted emissions in the form of volatile gases being present in the air. The carbon thus absorbs and binds substances from the air until it is saturated. The filter then has to be replaced, since thereupon the substances/emissions in question are otherwise let through the filter.

The larger surface offered by the carbon filter, the better filtering result can be achieved. This is because all air contact surfaces and channels provided in a carbon filter give possibilities of capturing substances to be separated.

After a certain time of use of ordinary carbon filters, the carbon releases substances that have been collected from the air intended for filtration, which means that for maintained function, the filter carbon has to be exchanged.

In a carbon filter, the passage speed is directly related to the ability to absorb and to the particle size of the carbon granulate. In normal ventilation appliances, there is a guideline value that the air must not pass through the carbon bed with a speed greater than 0,3 m/s in order to avoid speed based passages of substances.

As a rule, a particle filter is positioned upstream of a carbon filter in order to avoid clogging channels in the carbon filter with dust and other particles, which would otherwise result in deteriorated absorption ability. Also downstream of the carbon filter, a particle filter should be positioned in order, inter alia, to stop the dust possibly being emitting by the carbon filter itself.

As examples of background art can be mentioned US 4737173 and EP 1268030 B1.

In ventilation systems in airports and in larger workplaces and industries, there are as a rule carbon filter beds containing great amounts of carbon. The problem with such beds is that the bed construction results in a very large carbon bed area and great amounts of carbon as well as high pressure drops. The resulting associated cost is therefore high.

### AIM AND MOST IMPORTANT FEATURES OF THE INVENTION

The invention aims to at least reduce the problems of the background art and to provide an air cleaning device providing effective and flexible air cleaning with good economy. Further, in a practical and economic manner, it gives possibility to substance specific air cleaning with good operational economy and good filter economy.

This aim is obtained in a device as mentioned above in that the housing includes first connecting means including on the one hand elements for co-operation with a pre-filter in the form of at least a first particle filter, on the other hand elements for co-operation with at least one tubular first carbon filter, for the coupling thereof with its inside to the suctions side of the fan and in a flow direction downstream of the pre-filter, and that the housing includes second coupling means including on the one hand elements for the co-operation with at least one tubular second carbon filter for coupling thereof with its inside to the pressure side of the fan, on the other hand elements for the co-operation with an after filter in the form of at least one second particle filter such that it, seen in the flow direction, is downstream of the said second carbon filter.

Hereby are provided a plurality of (at least two) possibilities of capturing gaseous emissions - one in each carbon filter - as a difference to the background art according to the above wherein there exists only one emission elimination step.

Being able to have plural steps with separate carbon filters according to the invention provides on the one hand simple and effective possibilities of varying the carbon types being present in the different filters, granule size etc., on the other hand to configure the air cleaner according to what is to be achieved through the filtering, through more free choice of carbon types and combinations of carbon types.

Given that the total flow path is doubled compared to the one in a carbon filter having one single step, and that the flow speed and the exposed filter surface is the same, it is achieved that by having two carbon filter steps in a preferred manner is achieved that the dwell time for the flowing air in the carbon filter is increased twice, whereas the pressure drop advantageously increases only 1,6 times in separated carbon filters, according to the invention, compared to 2 times if the filter had been in one single step and with the double flow path length. This is a considerable advantage when it comes to increased possibilities of choice of components etc. The corresponding advantages are further accentuated in cases of more than two carbon filter steps.

Using a tubular first filter results in that the air firstly meets a filter surface that can be made considerably larger than the surface of the exit opening of the filter. Hereby, seen totally, is achieved a reduced pressure drop, which is a particular advantage, since the fan has it suction side in that direction and a fan having lower suction capacity can be used. The suction side can also normally be considered to be the weak side of today's air fans.

In order also to allow air to pass the second tubular filter in step 2 and exit at the outside of a "tube" with low exit speed is advantageous for the working conditions of the filter being an after filter, for example a HEPA filter.

In general an advantage is achieved with large filter surface areas and thereby low pressure drops. In a device according to the invention the air firstly passes through a pre-filter, than a tubular first carbon filter which has large surface area resulting in low pressure drop in the first carbon filter. The air thereupon passes out through one end side of the "tube" and further on towards the fan. In the next step, after the fan, the air passes/is pressed-in through the open end side of the second carbon filter of a second "tube", passes through the carbon filter and exits at its outside. Finally, the air enters for example a HEPA filter or any other suitable after filter.

The carbon filters can be of exactly the same kind or, in order to allow separation from the air of a plurality of substances, be different in respect of dimensions, granule size (particle size), impregnation etc. and vary as concerns weight or number or be different in any other way.

It is preferred that the housing is formed with a first filter chamber for receiving said first carbon filter (-s) and with a second filter chamber for receiving said second carbon filter (-s), said filter chamber being arranged sideways in respect of each other and being separated. Hereby the functions of the housing are differentiated and allows possible simplified handling, service and exchange of components. This is accentuated in that said first and second carbon filters in mounted condition in the respective filter chamber are disposed with parallel symmetric axes, wherein preferably said filter chambers are openable through a removable wall portion belonging to the housing.

As a variant, two or possibly more tubular (carbon) filters, each one having an open and a closed end, can be arranged with their open ends adjoining to a common air distribution and collecting unit respectively, which is positioned between the filters. Hereby a "plenum" is obtained having the respective filter short ends arranged towards each other.

It is preferred that the fan is arranged in a fan chamber which is exhibiting said elements for the co-operation with at least one first carbon filter and elements for the co-operation with said at least one second carbon filter, wherein, suitably, said elements for co-operation with said first and second carbon filters are positioned on a wall delimiting the fan chamber.

Suitably at least one of said elements for co-operation with a pre-filter and an after filter is adapted for reception of a plate-shaped filter, wherein the pre-filter and/or the after filter is constructed (made) in a plate-shape and suitably form outer walls of the device.

The invention also relates to a system for air treatment including an air treatment device according to the above, wherein the system also includes:
- at least one pre-filter in the form of at least one first particle filter,
- at least one tubular first carbon filter,
- at least one tubular second carbon filter,
- at least one after filter in the form of at least one second particle filter.

According to a preferred aspect of the invention at least any one of the groups:
i) first particle filter,
ii) first carbon filter,
iii) second carbon filter,
iv) second particle filter
includes a plurality of parallel filter elements with different characteristic, which are tuned to each other in respect of air flow passage resistance for controlling relative air flow between said plurality of filter elements for obtaining a desired filtering characteristic. That the filter elements within in one group are "parallel" here means that, in use of the system, air fractions are brought to flow through either one of elements within the group. "Parallel" is thus not related to the streams flowing in parallel directions. By tuning the filter elements within the group to each other in respect of air passage flow resistance it is achieved that the air flow is controlled between the elements. Greater resistance gives lower air flow and vice versa. This can be particularly valuable for cleaning air with a complex content of unwanted substances such that the filtering/the separation is directed towards substances that are primarily to be separated.

Said first and second carbon filters are preferably essentially circular cylindrical, which gives effective handling and surface efficiently.

The invention also relates to a method for air treatment, wherein the air:
i) is pre-filtered in at least one first particle filter,
ii) is filtered in at least one tubular first carbon filter in such a way that air intended for filtering is brought to flow from the outside and in through said first carbon filter, - whereupon the air passes a fan driving the air,
iii) is filtered in at least one tubular second carbon filter such that air intended for filtering is brought to flow from the inside and out through said second carbon filter,
iv) is after filtered in at least one second particle filter.

The air is hereby preferably filtered through particle filters and/or carbon filters having different filtering characteristics.

### BRIEF DESCRIPTION OF DRAWINGS

The invention will now be described in greater detail by way of embodiments and with reference to the annexed drawings, wherein:
Figs. 1a and b show a system for air treatment in a perspective view, in Fig. 1b with wall portions removed for clarity reasons,
Fig. 2 diagrammatically shows a section through an alternatively constructed air treatment device according to the invention,
Figs. 3a and b diagrammatically show connecting means for fastening a tubular carbon filter and a plate-shaped particle filter respectively in an air treatment device according to the invention,
Fig. 3c diagrammatically shows an arrangement with fastening of two tubular carbon filters to an intermediate air distributor or collector,
Fig. 4 diagrammatically shows a simplified flowchart of a simplified method sequence according to the invention, and
Fig. 5 diagrammatically shows an alternatively constructed device according to the invention.

### DESCRIPTION OF EMBODIMENTS

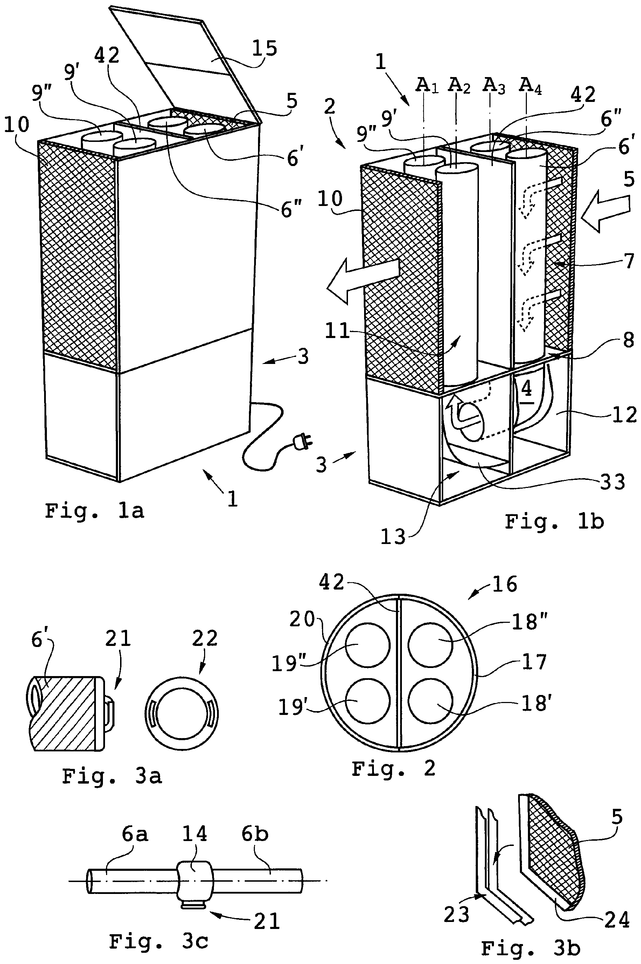

In Figs. 1a and 1b a system 1 for air treatment includes an air treatment device 2 being equipped with a number of filter units. The air treatment device 2 includes a housing 3, wherein, inside a fan chamber 12, a fan 4 is arranged, which provides a suction side 8 and a pressure side 13. The housing 3 exhibits connecting means for releasable reception of a number of filter elements, namely in the shown embodiment a pre-filter 5 in the form of a particle filter for filtering away dust and other particle-shaped impurities that can be present in the air to be filtered.

The pre-filter 5, together with the housing 3, delimits a first filter chamber 7 wherein there are arranged two tubular first carbon filters 6' and 6", which in turn with their respectively insides are connected to a suction side 8 of the fan 4. The tubular first and second carbon filters 6' and 6" are on their respective free end provided with a tight closing lid, which seals the carbon filter and forces air to be filtered to pass through the envelope surface of the carbon filters and further in through carbon material being positioned inside the envelope surface for capturing and separating for example gaseous impurities from the air to be filtered.

The fan 4 is preferably of the type centrifugal fan having a suction connection to the two carbon filters 6' and 6", wherein the fan 4 also is provided with an exhaust at its pressure side 13, where a deflector element 33 is positioned. On the pressure side, the fan is connected to exhaust filter means in the form of two tubular second carbon filters 9' and 9". These second carbon filters are with their respective insides connected to said pressure side such that air leaving the fan 4 are pressed through the tubular envelopes of the respective carbon filters 9' and 9". These carbon filters 9', 9" have suitably other characteristics than said first carbon filters, which will be discussed below.

A second filter chamber 11 inclosing the two tubular second carbon filters 9' and 9" are delimited by the housing and an after filter 10, which includes particle filter (-s) of for example HEPA type.

The tubular first and second carbon filters 6', 6", 9', 9" are connected to the fan chamber 12, which includes the suction side 8 as well as the pressure side 13 of the fan, such that they are attached to first and second connecting means respectively in form of elements for co-operation with said tubular carbon filters. These elements are arranged in an even plane with each other and in such a way that the tubular carbon filters 6', 6", 9', 9" are arranged with their symmetrical axes A₁, A₂, A₃, A₄ being parallel.

This way is achieved that, with an air treatment device 2 according to the embodiment shown in Fig. 1a and 1b, the tubular carbon filters are positioned relatively close to each other and yet with a very large filter surface area. They are further easily accessible for service and replacement by removing a removable wall portion 15, which in practice is comprised of a top lid being sealingly positioned against the upper edges of the pre-filter 5 and the after filter 10, against the side walls and against a separation wall 42 being arranged sealingly between the first and the second filter chambers 7 and 11.

Fig. 2 diagrammatically shows an alternatively constructed system for air treatment 16, wherein the housing is rounded with circular cross section, wherein a pre-filter 17 is arranged with semi-circular cross section and including tubular first carbon filters 18' and 18". On a second side of a separation wall 42, the system 16 comprises, at an exhaust side, tubular second carbon filters 19' and 19". 20 indicates an after filter being provided with a semi-circular cross section. It is to be understood that the system in Fig. 2 functions in the same way as the one shown in Figs. 1a and 1b with a fan arranged in a fan chamber below the filter chambers, said fan providing an under-pressure at the inlet side and with an over-pressure at the exhaust side corresponding to what is described above.

In Fig. 3a there is diagrammatically shown elements being included in connecting means for the connection of a tubular carbon filter 6' (shown in section), being provided with engagement elements of per se known kind in the form of twist engagement means with male parts that co-operate with corresponding female parts on elements 22, being arranged in said housing of an air treatment device. Also other per se known connecting elements can be provided.

In Fig. 3b are diagrammatically illustrated simple means arranged in the housing according to Fig. 1a and 1b for receiving plate-shaped pre-filter 5 and after filter 10, respectively, (Fig. 1a) in the form of parallel strips, allowing insertion through sliding down of a plate-shaped pre- or after filter 5. Said strips are indicated with 23 and strengthening frame means on the filter 5 for co-operation with these strips are indicated with 24.

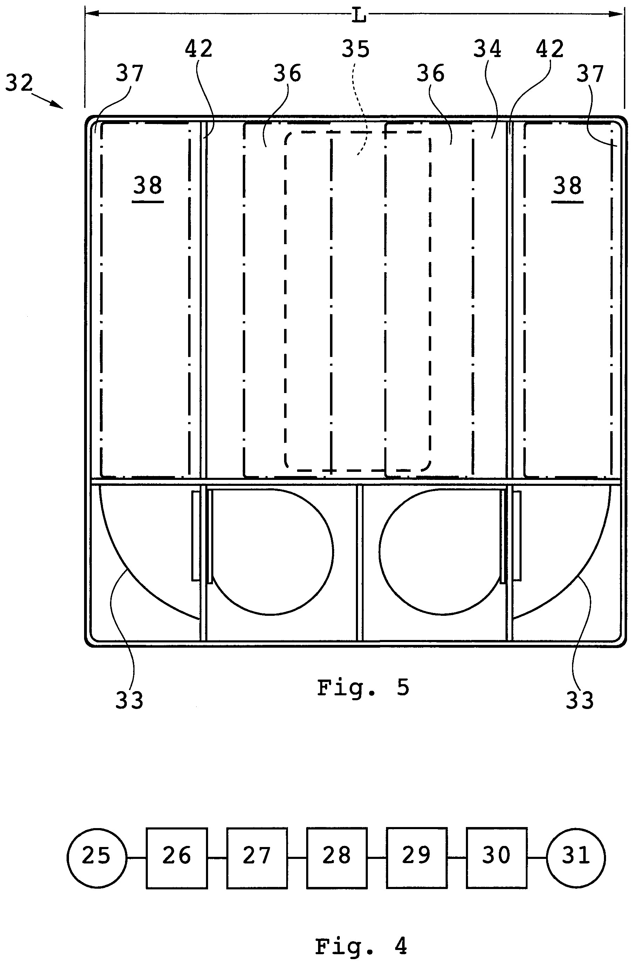

Fig. 4 diagrammatically illustrates a method sequence:
Position 25 indicates start of the sequence.
Position 26 indicates pre-filtering of the air in at least one first particle filter.
Position 27 indicates filtering of the air in at least one tubular first carbon filter such that air intended for filtering is brought to flow from the outside and in through said first carbon filter.
Position 28 indicates passage of the air in a fan driving the air.
Position 29 indicates filtering of the air in at least one tubular second carbon filter such that air intended for filtering is brought to flow from an inside and out through said second carbon filter.
Position 30 indicates after-filtering of the air in at least one second particle filter.
Position 31 indicates the end of the sequence.

Fig. 5 illustrates an alternatively constructed device 32, wherein, basically, the air treatment device 2 in Figs. 1a and 1b is doubled to its width L, such that centrally, a doubled first filter chamber 34 is arranged for incoming air, whereby the air passes pre-filters 35 arranged on the respective two longer sides of the housing and thereafter pass through either one or two doubled tubular first carbon filters 36. In the shown example two fans are arranged which supply each half of the device. Two separate second filter chambers are arranged, namely, on a second side of a respective separation wall 42 at each short side of the device 32 each including a pair of tubular second carbon filters 38.

The invention gives great possibilities to achieve very advantageous and requirement-controlled filtering of air in a building. It is thus achieved through the inventive arrangement good filter efficiency since large filter surface areas are allowed and thereby low air resistance within the frame of reasonable physical dimensions. Good noise properties can also be obtained in a device and a method according to the invention. There are possibilities of having the filters that are being arranged in parallel to have different characteristics, and thereby it is possible to control the amount flowing through the respective filter element by controlling and choosing the air resistance through the respective filter element. Besides the tubular carbon filters, the pre-filters as well as the after filters can include sideward arranged "parallel" filter elements of different character according to what is described above, which can be tuned to each other for control of the flow through the different elements.

The invention can be modified within the scope of the following claims. The application thus also includes tubular first and second carbon filters being comprised of one respective single element. It can also be possible to connect two "carbon filter tubes" that are tuned to each other with different characteristic axially to each other, tightly end to end and opening to opening.

As it is indicated above, also carbon filter tubes with intermediate air distributor and collector respectively can be used. This is diagrammatically illustrated in Fig. 3c, wherein two tubular carbon filters 6a and 6b are sealingly coupled to an intermediate air distributor or collector 14, which in turn is connected to the respective exhaust and suction side of a fan over a interface 21.

Different types of fans can be used such as axial, radial and centrifugal fans. Decisive for the choice of fan type is the application in question and particular prevailing requirements.

The invention can be applied in connection with large central ventilation devices as well as for local room positioned units as well as also for portable air treatment units.

## Claims

1. Air treatment device (2) including a housing (3) having an enclosed fan (4), wherein the housing is arranged for releasable receiving inlet filter means connected to a suction side (8) of the fan and outlet filter means connected to a pressure side (13) of the fan, **characterized in**
- **that** the housing (3) includes first connecting means including on the one hand elements for co-operation with a pre-filter in the form of at least a first particle filter (5), on the other hand elements for co-operation with at least one tubular first carbon filter (6',6"), for the coupling thereof with its inside to the suctions side of the fan and in a flow direction downstream of the pre-filter, and
- **that** the housing (3) includes second coupling means including on the one hand elements for the co-operation with at least one tubular second carbon filter (9',9") for coupling thereof with its inside to the pressure side of the fan, on the other hand elements for the co-operation with an after filter (10) in the form of at least one second particle filter such that it, seen in the flow direction, is downstream of the said second carbon filter.

2. Air treatment device according to claim 1, **characterized in that** the housing (3) is arranged with first filter chamber (7) for receiving said first carbon filter (-s) and with second filter chamber (11) for receiving said second carbon filter (-s) said filter chambers being arranged side by side and separated.

3. Air treatment device according to claim 2, **characterized in that** said first and second carbon filters (6',6",9',9") in mounted condition in the respective filter chamber are disposed with parallel symmetric axes (A₁,A₂,A₃,A₄).

4. Air treatment device according to claim 2 or 3, **characterized in that** said filter chambers (7,11) are openable through a removable wall portion (15) belonging to the housing.

5. Air treatment device according any one of the previous claims, **characterized in that** the fan (4) is arranged in a fan chamber (12) which is exhibiting said elements for the co-operation with at least one first carbon filter and elements for the co-operation with said at least one second carbon filter.

6. Air treatment device according to claim 5, **characterized in that** said elements for co-operation with said first and second carbon filters are positioned on a wall delimiting the fan chamber (12).

7. Air treatment device according to any one of the previous claims, **characterized in that** at least one of said elements for co-operation with a pre-filter (5) and an after filter (10) is adapted for reception of a plate-shaped filter.

8. System for air treatment including an air treatment device according to any one of the claims 1 - 7, **characterized in that** it also includes:
- at least one pre-filter (5) in the form of at least one first particle filter,
- at least one tubular first carbon filter (6',6"),
- at least one tubular second carbon filter (9',9"),
- at least one after filter (10) in the form of at least one second particle filter.

9. System for air treatment according to claim 8, **characterized in that** at least any one of the groups:
i) first particle filter,
ii) first carbon filter,
iii) second carbon filter,
iv) second particle filter
includes a plurality of filter elements with different characteristic, which are tuned to each other in respect of air flow passage resistance for controlling relative air flow between said plurality of filter elements for obtaining a desired filtering characteristic.

10. System for air treatment according to claim 8 or 9, **characterized in that** said first and second carbon filters (6',6",9',9") are essentially circular cylindrical.

11. Method for air treatment, wherein the air:
i) is pre-filtered in at least one first particle filter,
ii) is filtered in at least one tubular first carbon filter in such a way that air intended for filtering is brought to flow from the outside and in through said first carbon filter, - whereupon the air passes a fan driving the air,
iii) is filtered in at least one tubular second carbon filter such that air intended for filtering is brought to flow from the inside and out through said second carbon filter,
iv) is after filtered in at least one second particle filter.

12. Method according to claim 11, **characterized in that** the air is filtered through particle filters and/or carbon filters having different filter characteristics.

13. Method according to claim 11 or 12, **characterized in that** when at least any one of the groups:
i) first particle filter,
ii) first carbon filter,
iii) second carbon filter,
iv) second particle filter
includes a plurality of filter elements with different characteristic, relative air flow between said plurality of filter elements is controlled for obtaining a desired filtering characteristic, by they are being tuned to each other in respect of air flow passage resistance.

## Patentansprüche

1. Luftbehandlungsvorrichtung (2) mit einem Gehäuse (3), das ein eingeschlossenes Gebläse (4) aufweist, wobei das Gehäuse zum lösbaren Aufnehmen eines Einlassfiltermittels, das mit einer Ansaugseite (8) des Gebläses verbunden ist, und eines Auslassfiltermittels (13) des Gebläses angeordnet ist, **dadurch gekennzeichnet,**
- **dass** das Gehäuse (3) erste Verbindungsmittel aufweist, die einerseits Elemente zum Zusammenwirken mit einem Vorfilter in der Form von wenigstens einem ersten Partikelfilter (5), andererseits Elemente zum Zusammenwirken mit wenigstens einem rohrförmigen ersten Kohlenstofffilter (6', 6") zum Koppeln desselben mit seiner Innenseite an die Ansaugseite des Gebläses und in einer Strömungsrichtung stromabwärts des Vorfilters aufweisen, und
- **dass** das Gehäuse (3) zweite Kopplungsmittel aufweist, die einerseits Elemente zum Zusammenwirken mit wenigstens einem rohrförmigen zweiten Kohlenstofffilter (9', 9") zum Koppeln desselben mit seiner Innenseite an die Druckseite des Gebläses, andererseits Elemente zum Zusammenwirken mit einem Nachfilter (10) in der Form von wenigstens einem zweiten Partikelfilter aufweisen, derart, dass er, betrachtet in der Strömungsrichtung, stromabwärts des zweiten Kohlenstofffilters liegt.

2. Luftbehandlungsvorrichtung nach Anspruch 1,
**dadurch gekennzeichnet, dass** das Gehäuse (3) mit einer ersten Filterkammer (7) zum Aufnehmen des bzw. der ersten Kohlenstofffilter und mit einer zweiten Filterkammer (11) zum Aufnehmen des bzw. der zweiten Kohlenstofffilter angeordnet ist, wobei die Filterkammern Seite an Seite und separat angeordnet sind.

3. Luftbehandlungsvorrichtung nach Anspruch 2, **dadurch gekennzeichnet, dass** die ersten und zweiten Kohlenstofffilter (6', 6", 9', 9") in angebrachtem Zustand in der jeweiligen Filterkammer mit parallelen Symmetrieachsen (A1, A2, A3, A4) angeordnet sind.

4. Luftbehandlungsvorrichtung nach Anspruch 2 oder 3, **dadurch gekennzeichnet, dass** die Filterkammern (7,11) durch einen entfernbaren Wandabschnitt (15) bedienbar sind, der zu dem Gehäuse gehört.

5. Luftbehandlungsvorrichtung nach einem der vorangehenden Ansprüche, **dadurch gekennzeichnet, dass** das Gebläse (4) in einer Gebläsekammer (12) angeordnet ist, die die Elemente zum Zusammenwirken mit wenigstens einem ersten Kohlenstofffilter und Elemente zum Zusammenwirken mit wenigstens einem zweiten Kohlenstofffilter aufweist.

6. Luftbehandlungsvorrichtung nach Anspruch 5, **dadurch gekennzeichnet, dass** die Elemente zum Zusammenwirken mit dem ersten und zweiten Kohlenstofffilter an einer Wand angeordnet sind, die die Gebläsekammer (12) begrenzen.

7. Luftbehandlungsvorrichtung nach einem der vorangehenden Ansprüche, **dadurch gekennzeichnet, dass** wenigstens eins der Elemente zum Zusammenwirken mit einem Vorfilter (5) und einem Nachfilter (10) zur Aufnahme eines plattenförmigen Filters angepasst ist.

8. System zur Luftbehandlung, aufweisend eine Luftbehandlungsvorrichtung nach einem der Ansprüche 1-7, **dadurch gekennzeichnet, dass** es außerdem Folgendes aufweist:
- wenigstens einen Vorfilter (5) in der Form von wenigstens einem ersten Partikelfilter,
- wenigstens einen rohrförmigen ersten Kohlenstofffilter (6', 6"),
- wenigstens einen rohrförmigen zweiten Kohlenstofffilter (9', 9"),
- wenigstens einen Nachfilter (10) in der Form von wenigstens einem zweiten Partikelfilter.

9. System zur Luftbehandlung nach Anspruch 8, **dadurch gekennzeichnet, dass** wenigstens eine der Gruppen:
i) erster Partikelfilter,
ii) erster Kohlenstofffilter,
iii) zweiter Kohlenstofffilter,
iv) zweiter Partikelfilter
mehrere Filterelemente mit unterschiedlicher Charakteristik aufweist, die hinsichtlich des Luftdurchlasswiderstands aufeinander abgestimmt sind, um relative Luftströmung zwischen den mehreren Filterelementen zu steuern, um eine gewünschte Filtercharakteristik zu erlangen.

10. System zur Luftbehandlung nach Anspruch 8 oder 9, **dadurch gekennzeichnet, dass** die ersten und zweiten Kohlenstofffilter (6', 6", 9', 9") im Wesentlichen kreiszylinderförmig sind.

11. Verfahren zur Luftbehandlung, wobei die Luft:
i) in wenigstens einem ersten Partikelfilter vorgefiltert wird,
ii) in wenigstens einem rohrförmigen ersten Kohlenstofffilter gefiltert wird, derart, dass zu filternde Luft von außen und durch den ersten Kohlenstofffilter hinein strömen gelassen wird,
- woraufhin die Luft ein Gebläse passiert, das die Luft antreibt,
iii) in wenigstens einem rohrförmigen zweiten Kohlenstofffilter gefiltert wird, derart, dass zu filternde Luft von innen und durch den zweiten Kohlenstofffilter heraus strömen gelassen wird,
iv) in wenigstens einem zweiten Partikelfilter nachgefiltert wird.

12. Verfahren nach Anspruch 11, **dadurch gekennzeichnet, dass** die Luft durch Partikelfilter und/oder Kohlenstofffilters mit unterschiedlichen Filtercharakteristiken gefiltert wird.

13. Verfahren nach Anspruch 11 oder 12,
**dadurch gekennzeichnet, dass**, wenn wenigstens eine der Gruppen:
i) erster Partikelfilter,
ii) erster Kohlenstofffilter,
iii) zweiter Kohlenstofffilter,
iv) zweiter Partikelfilter
mehrere Filterelemente mit unterschiedlicher Charakteristik aufweist, relativer Luftstrom zwischen den mehreren Filterelementen gesteuert wird, um eine gewünschte Filtercharakteristik zu erlangen, indem sie hinsichtlich des Luftdurchlasswiderstands aufeinander abgestimmt werden.

## Revendications

1. Dispositif de traitement d'air (2) comprenant un boîtier (3) renfermant un ventilateur (4), le boîtier étant conçu pour recevoir de manière démontable des moyens de filtrage d'entrée raccordés du côté de la dépression (8) du ventilateur et des moyens de filtrage de sortie raccordés du côté de la surpression (13) du ventilateur, **caractérisé en ce que**
- le boîtier (3) comprend des premiers moyens de couplage, y compris d'une part des éléments de coopération avec un préfiltre sous la forme d'au moins un premier filtre à particules (5), d'autre part des éléments de coopération avec au moins un premier filtre tubulaire à carbone (6', 6"), pour le couplage de l'intérieur de ce dernier au côté de la dépression du ventilateur, et situés, vus dans la direction d'écoulement, en aval du préfiltre, et
- le boîtier (3) comprend des seconds moyens de couplage, y compris d'une part des éléments de coopération avec au moins un second filtre tubulaire à carbone (9', 9"), pour le couplage de l'intérieur de ce dernier au côté de la surpression du ventilateur, d'autre part des éléments de coopération avec un postfiltre (10) sous la forme d'au moins un second filtre à particules et situés, vus dans la direction d'écoulement, en aval dudit second filtre à carbone.

2. Dispositif de traitement d'air selon la revendication 1, **caractérisé en ce que** le boîtier (3) est conçu avec une première chambre de filtrage (7) destinée à recevoir le(s)dit(s) premier(s) filtre(s) à carbone et avec une seconde chambre de filtrage (11) destinée à recevoir le(s)dit(s) second(s) filtre(s) à carbone, lesdites chambres de filtrage étant disposées l'une à côté de l'autre et séparées.

3. Dispositif de traitement d'air selon la revendication 2, **caractérisé en ce que** lesdits premier et second filtres à carbone (6', 6", 9', 9"), une fois montés dans la chambre de filtrage correspondante, sont disposés de manière que leurs axes (A₁, A₂, A₃, A₄) soient parallèles et symétriques.

4. Dispositif de traitement d'air selon la revendication 2 ou 3, **caractérisé en ce que** lesdites chambres de filtrage (7, 11) peuvent être ouvertes au moyen d'une partie de paroi amovible (15) appartenant au boîtier.

5. Dispositif de traitement d'air selon l'une quelconque des revendications précédentes, **caractérisé en ce que** le ventilateur (4) est disposé dans une chambre du ventilateur (12) qui présente lesdits éléments de coopération avec au moins un premier filtre à carbone et les éléments de coopération avec lesdits au moins un second filtre à carbone.

6. Dispositif de traitement d'air selon la revendication 5, **caractérisé en ce que** lesdits éléments de coopération avec lesdits premier et second filtres à carbone sont placés sur une paroi délimitant la chambre du ventilateur (12).

7. Dispositif de traitement d'air selon l'une quelconque des revendications précédentes, **caractérisé en ce qu'**au moins un desdits éléments de coopération avec le préfiltre (5) et le postfiltre (10) est conçu pour recevoir un filtre en plaque.

8. Système de traitement d'air comprenant un dispositif de traitement d'air selon l'une quelconque des revendications 1 à 7, **caractérisé en ce qu'**il comprend également :
- au moins un préfiltre (5) sous la forme d'au moins un premier filtre à particules,
- au moins un premier filtre tubulaire à carbone (6', 6"),
- au moins un second filtre tubulaire à carbone (9', 9"),
- au moins un postfiltre (10) sous la forme d'au moins un second filtre à particules.

9. Système de traitement d'air selon la revendication 8, **caractérisé en ce qu'**au moins un quelconque de ces groupes :
i) premier filtre à particules,
ii) premier filtre à carbone
iii) second filtre à carbone,
iv) second filtre à particules
comprend une pluralité d'éléments de filtrage possédant des caractéristiques différentes, qui sont réglés l'un par rapport à l'autre en termes de résistance à l'écoulement d'air afin de commander le débit relatif au sein de ladite pluralité d'éléments de filtrage et obtenir une caractéristique de filtrage souhaitée.

10. Système de traitement d'air selon la revendication 8 ou 9, **caractérisé en ce que** lesdits premier et second filtres à carbone (6', 6", 9', 9") sont essentiellement cylindriques circulaires.

11. Système de traitement d'air dans lequel l'air :
i) est préfiltré par au moins un premier filtre à particules,
ii) est filtré par au moins un premier filtre tubulaire à carbone de manière que l'air à filtrer soit amené de l'extérieur vers l'intérieur par ledit premier filtre à carbone, - l'air passant alors par un ventilateur mettant l'air en mouvement,
iii) est filtré par au moins un second filtre tubulaire à carbone de manière que l'air à filtrer soit amené de l'intérieur vers l'extérieur par ledit second filtre à carbone,
iv) est ensuite filtré par au moins un second filtre à particules.

12. Procédé selon la revendication 11, **caractérisé en ce que** l'air est filtré par des filtres à particules et/ou des filtres à carbone présentant des caractéristiques différentes.

13. Procédé selon la revendication 11 ou 12, **caractérisé en ce que**, lorsque au moins un quelconque de ces groupes :
i) premier filtre à particules,
ii) premier filtre à carbone
iii) second filtre à carbone,
iv) second filtre à particules
comprend une pluralité d'éléments de filtrage possédant des caractéristiques différentes, le débit relatif au sein de ladite pluralité d'éléments de filtrage est commandé de manière à obtenir une caractéristique de filtrage souhaitée, par le réglage de l'un par rapport à l'autre en termes de résistance à l'écoulement d'air.
